# EUROPÄISCHE PATENTANMELDUNG

(11) **EP 3 434 399 A2**
(43) Veröffentlichungstag der Anmeldung: **30.01.2019**
(21) Anmeldenummer: 18182193.5
(22) Anmeldetag: 06.07.2018
(51) Int. Cl.: B23B 3/00, B23Q 1/62, B23Q 5/28, B23Q 5/40, B23Q 11/00, B23Q 17/22

(54) **DREHMASCHINE**

(30) Priorität: 06.07.2017 DE 102017115195
(71) Anmelder: DMT Drehmaschinen GmbH & Co. KG, 79539 Lörrach (DE)
(72) Erfinder: Seidel, Bela, 79650 Schopfheim - Schlechtbach (DE)
(74) Vertreter: Mertzlufft-Paufler, Cornelius

(57) **Zusammenfassung**

Die Erfindung betrifft eine Drehmaschine mit einer dezentralen Antriebstechnik zur Bearbeitung eines Werkstücks mit einer mittels eines Spindelantriebes drehbaren Arbeitsspindel, einem Bettschlitten (1), der entlang einer z-Achse (3) eines Maschinenbetts der Drehmaschine beweglich geführt ist, und einem auf dem Bettschlitten (1) senkrecht zur Längsachse des Maschinenbetts entlang einer x-Achse (4) beweglich geführten Planschlitten (2), wobei zumindest entweder der Bettschlitten (1) oder der Planschlitten (2) anhand einer manuellen (5,7) und einer gegenüber dem Spindelantrieb weiteren motorischen Antriebseinheit (6,8) verstellbar ist.

## Beschreibung

Die Erfindung betrifft eine Drehmaschine zur Bearbeitung eines Werkstücks, mit einer mittels eines Spindelantriebes drehbaren Arbeitsspindel und mit einer in mindestens zwei Bewegungsachsen verfahrbaren Werkzeughalterung.

Insbesondere im Mittelstand gibt es viele Unternehmen, die im Bereich der Drehtechnik arbeiten. In diesem Industriefeld geht es vor allem um die maschinelle Bearbeitung und Erzeugung von Bauteilen für den Maschinen- und Vorrichtungsbau und rotationssymmetrischen Teilen. Zahlreiche Industrieberufe hängen von dieser Art der Bauteilherstellung ab, in dem i.d.R. eine exzellente Qualität gefordert wird, mit der ein hoher Anspruch an die Fähigkeiten des Bedieners einhergeht.

Hohe Stückzahlen werden bevorzugt auf vollautomatischen CNC-Drehmaschinen oder Drehautomaten hergestellt, die die Massenware entsprechend günstig produzieren können.

Für kleinere Stückzahlen aber auch für Teile mit Bedarf einer automatischen Abarbeitung des Drehvorgangs werden zyklengesteuerete Drehmaschinen eingesetzt.

Für Einzelteile, Reparaturen, Nacharbeiten und individuelle Qualitätsanforderungen, aber auch für die Ausbildung sind Voll-CNC Drehmaschinen oder Zyklen-Drehmaschinen ungeeignet, da der Einricht- und Vorbereitungsaufwand für den eigentlichen Drehvorgang zu aufwendig und unrentabel wäre oder die gesamte Handhabung auch wegen der Zugänglichkeit, insbesondere bei der Ausbildung, untauglich ist. Speziell für die Grundausbildung fehlt das wichtige Schnittdruckgefühl.

Deshalb werden für diese Bearbeitung i.d.R. konventionelle Drehmaschinen eingesetzt. Konventionelle Drehmaschinen gibt es mit rein manuell verfahrbaren Bett- und Planschlitten (diese werden dann oft nur "manuelle" genannt) oder, weit häufiger, mit Zug- und Leitspindel ausgestattet, um die beiden Achsen automatisch, jedoch nur einzeln und nicht simultan, verfahren zu können. Eine Herstellung von komplexen Konturen und Formen, wie z.B. Kegel- oder Kugelgeometrien, verschiedenen Gewinden sowie Gewinde- und Schleiffreistichen, ist damit nicht möglich. Bisher war es daher in Ausbildungsstätten erforderlich, dass die Bediener auf zumindest zwei unterschiedlichen Drehmaschinen, nämlich auf einer manuellen und/oder einer konventionellen und einer CNC-Drehmaschine angelernt wurden. Dies hatte hohe Anschaffungskosten zur Folge. CNC-Drehmaschinen weisen jedoch den Nachteil auf, dass Schnittdrücke und deren Veränderung während der Bearbeitung eines Werkstücks durch den Bediener nicht spürbar sind, da dort Vorschubkräfte ausschließlich durch motorische Antriebseinheiten erzeugt werden.

Es besteht daher die Aufgabe, eine Drehmaschine der eingangs erwähnten Art zu schaffen, die gegenüber vorbekannten Drehmaschinen verbesserte Gebrauchseigenschaften aufweist. Insbesondere besteht die Aufgabe für die Ausbildung von Bedienern nur eine einzige Drehmaschine zu benötigen.

Die Lösung dieser Aufgabe erfolgt erfindungsgemäß durch die Merkmale gemäß Anspruch 1. Insbesondere wird für die Drehmaschine der eingangs erwähnten Art vorgeschlagen, dass die Werkzeughalterung in wenigstens einer Bewegungsachse wahlweise mittels einer manuellen Antriebseinheit oder mittels einer von dem Spindelantrieb separaten motorischen Antriebseinheit motorisch antreibbar ist, und dass wenigstens eine Erfassungseinheit für wenigstens eine Position der Werkzeughalterung ausgebildet ist, wobei eine mit der Erfassungseinheit erfasste Position der Werkzeughalterung sowohl bei eingekoppelter manueller Antriebseinheit als auch bei eingekoppelter motorischer Antriebseinheit bereitgestellt ist. Beispielsweise kann es sich um eine digitale Erfassungseinheit handeln. Dies hat den Vorteil, dass eine kontinuierliche Positionsbestimmung der Werkzeughalterung entlang ihrer Bewegungsachsen unabhängig von der verwendeten Antriebsart, also manuell oder motorisch, möglich ist. Die Position der Werkzeughalterung ist daher jederzeit, unabhängig davon, ob sie aus einer Ausgangsposition verstellt wurde, erfassbar. Vorzugsweise ist die Werkzeughalterung über eine mechanische Kopplung mittels einer manuellen Antriebseinheit oder mittels einer von dem Spindelantrieb separaten motorischen Antriebseinheit motorisch antreibbar. Ein Vorschub und/oder eine Zustellung der Werkzeughalterung zum Werkstück ist daher unabhängig vom Spindelantrieb mittels zumindest einer weiteren motorischen und/oder einer manuellen Antriebseinheit möglich.

Die Erfindung betrifft also eine Drehmaschine mit einer dezentralen Antriebstechnik, welche die Grundfunktionen der konventionellen Drehmaschinen mit denen der CNC-/ Zyklen-Drehmaschinen in einem neuen Maschinentyp vereint. Aufgrund der erfindungsgemäßen Ausgestaltung der zuvor beschriebenen Drehmaschine weist diese Bedieneigenschaften auf, die denen einer konventionellen Drehmaschine sehr nahekommen, aber darüber hinaus auch die Herstellung komplexer Formen und Konturen ermöglicht. Daher eignet sich die erfindungsgemäße Drehmaschine besonders zu Ausbildungszwecken und/oder aber auch für Bearbeitung von wechselnden oder unhandlichen Teilgeometrien (wie sie besonderes in der Instandsetzung auftreten) oder Nacharbeitungen an Werkstücken, denn sie ist einfacher zu bedienen und preisgünstiger in der Anschaffung, da nur noch eine Drehmaschine erforderlich ist. Die erfindungsgemäße Drehmaschine stellt daher einen vollkommen neuen Drehmaschinentyp mit gegenüber bestehenden Drehmaschinen neuen Funktionen dar.

Gemäß einer vorteilhaften Ausgestaltung kann es vorgesehen sein, dass die zumindest zwei Bewegungsachsen der Werkzeughalterung durch einen Bettschlitten und/oder durch einen Planschlitten definiert sind. Vorzugsweise ist der Bettschlitten entlang einer Längsachse eines Maschinenbetts der Drehmaschine beweglich geführt und/oder der Planschlitten quer oder senkrecht zur Längsachse des Maschinenbetts beweglich geführt.

Besonders vorteilhaft kann es dabei sein, wenn zumindest ein Schlitten entlang einer ihm zugeordneten Bewegungsachse anhand einer manuellen und einer weiteren motorischen Antriebseinheit verstellbar ist. Der zumindest eine Schlitten weist also eine vom zentralen Spindelantrieb der Drehmaschine unabhängige weitere Antriebseinheit auf, durch welche der zumindest eine Schlitten entlang seiner Achse unabhängig von der Drehzahl der Spindel verfahrbar ist. Dies ermöglicht eine genauere und unabhängigere Bewegung des Schlittens. Darüber hinaus ist der Schlitten zusätzlich auch über eine manuelle Antriebseinheit entlang seiner Achse verstellbar. Durch die manuelle Antriebseinheit kann eine Betätigungskraft des Bedieners direkt in eine auf den Schlitten wirkende Stellkraft umgesetzt werden, so dass der Bediener ein besseres Schnittgefühl erfährt. Ein weiterer Vorteil ist außerdem, dass neben einer festen Drehzahl auch eine konstante Schnittgeschwindigkeit gefahren werden kann, da eine Vorschubgeschwindigkeit und/oder eine Zustellgeschwindigkeit eines Werkzeugs unabhängig von der Drehgeschwindigkeit der das Werkstück tragenden Arbeitsspindel einstellbar ist. Abhängig vom aktuell bearbeiteten Durchmesser eines Werkstücks ist also die Drehzahl der Arbeitsspindel unabhängig von einer Vorschub- und/oder Zustellgeschwindigkeit einstellbar. Insbesondere derart, dass die Drehgeschwindigkeit der Arbeitsspindel mit abnehmenden Durchmesser des Werkstücks, vorzugsweise automatisch, erhöht wird, während die Vorschubgeschwindigkeit und/oder eine Zustellgeschwindigkeit konstant bleibt/bleiben. Mittels der manuellen Antriebseinheit ist ein rein manuelles Drehen, vorzugsweise ohne Unterstützung durch eine Steuerung, möglich. Besonders vorteilhaft kann es sein, wenn der Planschlitten auf dem Bettschlitten geführt ist.

Eine vorteilhafte Ausgestaltung kann vorsehen, dass ein oder beispielsweise der bereits genannte Bettschlitten mittels einer manuellen Bettschlitten-Antriebseinheit und mittels einer motorischen Bettschlitten-Antriebseinheit, insbesondere entlang einer z-Achse, verstellbar ist. Die z-Achse kann der Längsachse des Maschinenbetts entsprechen. Dabei kann es besonders zweckmäßig sein, wenn der Bettschlitten wahlweise mittels entweder der manuellen Bettschlitten-Antriebseinheit oder mittels der motorischen Bettschlitten-Antriebseinheit verstellbar ist.

Eine weitere vorteilhafte Ausgestaltung kann vorsehen, dass ein oder beispielsweise der bereits genannte Planschlitten mittels einer manuellen Planschlitten-Antriebseinheit und mittels einer motorischen Planschlitten-Antriebseinheit, insbesondere entlang einer x-Achse, verstellbar ist. Die x-Achse liegt vorzugsweise senkrecht zur z-Achse. Dabei kann es besonders zweckmäßig sein, wenn der Bettschlitten wahlweise mittels entweder der manuellen Bettschlitten-Antriebseinheit oder mittels der motorischen Planschlitten-Antriebseinheit verstellbar ist.

Um die Bedienbarkeit der Drehmaschine zu erleichtern und deren Abmessungen möglichst gering zu halten, kann es vorteilhaft sein, wenn eine oder die bereits genannte manuelle und/oder eine oder die bereits genannte motorische Bettschlitten-Antriebseinheiten zusammen mit einem oder dem bereits genannten Bettschlitten verstellbar ist/sind. Alternativ oder ergänzend dazu kann es vorteilhaft sein, wenn die manuelle und/oder die motorische Planschlitten-Antriebseinheit zusammen mit dem Planschlitten und/oder dem Bettschlitten verstellbar ist/sind.

Zur Herstellung komplexer Formen und Konturen kann es zweckmäßig sein, wenn ein oder beispielsweise der bereits genannte Bettschlitten und ein oder beispielsweise der bereits genannte Planschlitten gleichzeitig entlang ihrer Bewegungsachsen verstellbar sind, insbesondere wobei einer der Schlitten manuell und der andere Schlitten motorisch antreibbar ist oder wobei beide Schlitten gleichzeitig motorisch oder gleichzeitig manuell antreibbar sind. Dabei kann es besonders zweckmäßig sein, wenn eine oder die bereits zuvor genannte, insbesondere diesem Schlitten zugeordnete, motorische Antriebseinheit dabei zur Fixierung des einen Schlittens in einer Position verwendbar ist, während der andere Schlitten mittels der ihm zugeordneten manuellen oder motorischen Antriebseinheit verstellbar ist. Dadurch ist eine besonders präzise Bearbeitung des Werkstücks möglich. So ist es beispielsweise möglich, dass ein Vorschub des Bettschlittens mittels der motorischen Bettschlitten-Antriebseinheit erfolgt, während eine Zustellung des Werkzeugs über den Planschlitten durch den Benutzer von Hand mittels der manuellen Planschlitten-Antriebseinheit möglich ist. Dadurch kann der Benutzer Schnittdrücke und deren Veränderung während der Bearbeitung des Werkstücks erfühlen und bedarfsgerecht darauf reagieren.

Um die Arbeitssicherheit an der Drehmaschine zu verbessern, kann es zweckmäßig sein, wenn die Drehmaschine eine Kupplungsvorrichtung oder mehrere Kupplungsvorrichtungen aufweist, die jeweils zwischen einem Betätigungselement einer oder der bereits genannten manuellen Antriebseinheit und einer Abtriebswelle einer oder der bereits genannten manuellen Antriebseinheit angeordnet ist/sind und mittels welcher das Betätigungselement der manuellen Antriebseinheit eines oder des bereits genannten Bettschlittens und/oder eines oder des bereits genannten Planschlittens jeweils mechanisch mit dem Bettschlitten und/oder mit dem Planschlitten koppelbar ist, wobei im entkuppelten Zustand keine Kraftübertragung durch die manuelle Antriebseinheit auf den Bettschlitten und/oder den Planschlitten möglich ist. Gemäß einer besonders vorteilhaften Ausgestaltung kann es vorgesehen sein, dass die Drehmaschine zwei Kupplungsvorrichtungen aufweist, wobei davon eine der manuellen Bettschlitten-Antriebseinheit und die andere der manuellen Planschlitten-Antriebseinheit zugeordnet ist. Durch die zumindest eine Kupplungsvorrichtung kann verhindert werden, dass eine durch eine motorische Antriebseinheit erzeugte Kraft auf das Betätigungselement der manuellen Antriebseinheit wirkt, wodurch der Benutzer verletzt werden könnte.

Gemäß einer besonders vorteilhaften Ausgestaltung kann vorgesehen sein, dass die eine oder die Kupplungsvorrichtungen als elektromagnetische Kupplungsvorrichtung/en ausgestaltet ist/sind, wobei diese derart eingerichtet ist/sind, dass sie im deaktivierten, stromlosen Zustand entkuppelt ist/sind und im aktivierten, bestromten Zustand gekuppelt ist/sind. Dies hat den Vorteil, dass beispielsweise bei einem Schaden an einer elektrischen Leitung keine ungewollte Verkupplung und somit kein Kraftfluss erfolgen kann.

Darüber hinaus ist auch eine umgekehrte Wirkungsweise denkbar, bei welcher die zumindest eine Kupplungsvorrichtung im stromlosen Zustand gekuppelt ist.

Um eine Bedienung der Drehmaschine, insbesondere sämtlicher Antriebseinheiten des Bett- und Planschlittens, von nur einen Seite der Drehmaschine zu ermöglichen, kann es vorteilhaft sein, wenn eine oder die bereits zuvor genannte Abtriebswelle der manuellen Bettschlitten-Antriebseinheit über ein Winkelgetriebe mit einer Hohlwelle verbunden ist, wobei die Hohlwelle mit einer mit einem oder dem bereits zuvor genannten Betätigungselement der manuellen Bettschlitten-Antriebseinheit verbundenen Innenwelle über eine oder die bereits genannte Kupplungsvorrichtung, insbesondere eine oder die bereits zuvor genannte elektromagnetische Kupplungsvorrichtung, mechanisch koppelbar ist. Dadurch ist ein manuelles Drehen, insbesondere ein manueller Vorschub durch eine Kraftübertragung auf den Bettschlitten mittels einer senkrecht zur z-Achse stehenden Welle des manuellen Betätigungselements möglich.

Zur weiteren Verbesserung der Arbeitssicherheit kann es zweckmäßig sein, wenn eine oder die zuvor genannte zumindest eine Kupplungsvorrichtung derart eingerichtet ist, dass diese entkuppelt ist, wenn eine Kraftübertragung durch die motorische Antriebseinheit auf den Bettschlitten und/oder den Planschlitten erfolgt, so dass der Bettschlitten und/oder der Planschlitten jeweils entweder mittels der manuellen oder der motorischen Antriebseinheit verstellbar ist/sind.

Um eine Kraftübertragung einer Abtriebswelle der manuellen und/oder der motorischen Bettschlitten-Antriebseinheit auf eine Antriebsmutter des Bettschlittens zu erreichen, kann es zweckmäßig sein, wenn die Drehmaschine ein Riemengetriebe, insbesondere ein Zahnriemengetriebe, aufweist, über welches eine Kraftübertragung von der manuellen Bettschlitten-Antriebseinheit und/oder der motorischen Bettschlitten-Antriebseinheit auf den Bettschlitten, insbesondere auf die Antriebsmutter, möglich ist. Ein Zahnriemengetriebe ist dabei besonders vorteilhaft, da dadurch eine Winkelbewegung schlupffrei übertragbar ist. Ferner ist ein Zahnriemengetriebe relativ kostengünstig herstellbar. Ein weiterer Vorteil eines Zahnriemengetriebes ist seine Geräuscharmut gegenüber anderen Getrieben.

Alternativ oder ergänzend dazu kann es vorgesehen sein, dass eine oder die zuvor bereits genannte Abtriebswelle der manuellen Bettschlitten-Antriebseinheit mit einer Riemenscheibe, insbesondere mit einem Zahnrad, mechanisch gekoppelt oder koppelbar ist und diese Riemenscheibe, insbesondere das Zahnrad, mit einer Abtriebswelle der motorischen Bettschlitten-Antriebseinheit und/oder einem Gewindespindelantrieb, insbesondere einer Antriebsmutter, des Bettschlittens über einen Riemen, insbesondere einen Zahnriemen, verbunden ist. Diese Ausgestaltung hat den Vorteil, dass eine Vorschubdistanz unabhängig von der Antriebsart über einen Drehgeber der motorischen Antriebseinheit und/oder einer Abtriebswelle der manuellen Antriebseinheit bestimmbar ist. Bei einer Betätigung des Bestätigungselements von Hand dreht sich somit die Abtriebswelle der motorischen Antriebseinheit und/oder bei motorischem Antrieb dreht sich die Abtriebswelle der manuellen Antriebseinheit mit.

Eine vorteilhafte, da besonders kostengünstig und einfach fertigbare Ausgestaltung kann vorsehen, dass eine oder die Abtriebswelle der manuellen Planschlitten-Antriebseinheit über eine Kupplung, insbesondere eine Klauenkupplung, mit einer Gewindespindel eines dem Planschlitten zugeordneten Gewindespindelantriebes verkuppelbar oder gekuppelt ist. Eine Klauenkupplung ist besonders vorteilhaft, da die Abtriebswelle und die Gewindespindel nicht genau fluchten müssen und somit Abweichungen in ihren axialen Ausrichtungen ausgleichbar sind.

Es kann weiter zweckmäßig sein, wenn eine oder die zuvor bereits genannte Abtriebswelle der motorischen Planschlitten-Antriebseinheit, insbesondere über einen Zahnriemen, mit einer oder der Gewindespindel eines oder des bereits zuvor genannten, dem Planschlitten zugeordneten Gewindespindelantriebes mechanisch verbunden ist. Diese Ausgestaltung hat den Vorteil, dass eine Zustelldistanz, unabhängig von der Antriebsart, über einen Drehgeber der motorischen Antriebseinheit und/oder eine Abtriebswelle der manuellen Antriebseinheit bestimmbar ist. Bei einer Betätigung des Bestätigungselements von Hand dreht sich somit die Abtriebswelle der motorischen Antriebseinheit und/oder bei motorischem Antrieb dreht sich die Abtriebswelle der manuellen Antriebseinheit mit. Als Zustelldistanz wird eine Vorschubdistanz in der x-Achse, das heißt in der Planachse, bezeichnet.

Damit ein Bediener eine Vorschub- und/oder eine Zustelldistanz einfach ablesen kann, kann es vorteilhaft sein, wenn die Drehmaschine zumindest eine Anzeigeeinheit, insbesondere eine mechanische Anzeigeeinheit, zur Anzeige einer Vorschubdistanz und/oder einer Zustelldistanz aufweist. Die Anzeigeeinheit kann ein Teil der Erfassungseinheit sein oder mit dieser gekoppelt oder zusätzlich zu dieser ausgebildet sein. Vorzugsweise ist die zumindest eine Anzeigeeinheit mit einer oder der bereits zuvor genannten Abtriebswelle der manuellen Bettschlitten-Antriebseinheit und/oder der Abtriebswelle der manuellen Planschlitten-Antriebseinheit mechanisch gekoppelt oder koppelbar. Eine geeignete Kopplung kann beispielsweise über eine Rutschkupplung und/oder einen O-Ring erreicht werden. Die Anzeigeeinheit kann beispielsweise eine Analoganzeige sein. Durch die Kopplung mit der Abtriebswelle der manuellen Bettschlitten-Antriebseinheit und/oder der Abtriebswelle der manuellen Planschlitten-Antriebseinheit ist es möglich, dass eine kontinuierliche Positionsbestimmung des Bettschlittens und/oder des Planschlittens mittels der jeweiligen Anzeigeeinheit durchführbar ist. Das kann bedeuten, dass eine Positionsbestimmung des Bettschlittens und/oder des Planschlittens unabhängig von der vorgenommenen Antriebsart möglich ist. Die Abtriebswelle der manuellen Bettschlitten-Antriebseinheit und/oder die Abtriebswelle der manuellen Planschlitten-Antriebseinheit wird/werden nämlich auch dann mitbewegt, wenn der Benutzer eine Verstellung des/der Schlitten/s durch die motorische Bettschlitten-Antriebseinheit und/oder die motorische Planschlitten-Antriebseinheit vornimmt und das jeweilige Betätigungselement der manuellen Bettschlitten-Antriebseinheit und/oder der manuellen Planschlitten-Antriebseinheit ausgekoppelt ist, insbesondere also nicht mit der jeweiligen Abtriebswelle verbunden ist. Dies ermöglicht ein einfaches Umschalten von einem manuellen auf einen motorischen Betrieb und umgekehrt, insbesondere ohne dass einer der Schlitten zuvor in eine Ausgangslage bewegt werden muss. Insbesondere ein elektronischer Werkzeugspeicher (beispielsweise in einem Programm und/oder einer Systemsteuerung der Drehmaschine) kann somit beliebig einsetzbar sein, egal wie oft zwischen den Antrieben umgeschaltet wird. Somit kann es vorgesehen sein, dass der elektronische Werkzeugspeicher bei einem Wechsel zwischen dem motorischen und dem manuellen Antrieb nicht abgeschaltet und/oder gelöscht wird, insbesondere sich also das ausgewählte Werkzeug und/oder mit diesem verknüpfte Werkzeugdaten merkt.

Es kann weiter zweckmäßig sein, wenn die Abtriebswelle der manuellen Bettschlitten-Antriebseinheit mit der Abtriebswelle der motorischen Bettschlitten-Antriebseinheit, insbesondere über einen Zahnriemen, mechanisch gekoppelt ist.

Um eine möglichst präzise Verstellung des Bettschlittens entlang der zugeordneten Bewegungsachse zu ermöglichen, kann es vorteilhaft sein, wenn der Bettschlitten mittels eines Gewindespindelantriebs verstellbar ist, wobei der Gewindespindelantrieb eine Gewindespindel, insbesondere eine in einer oder der z-Achse angeordnete Gewindespindel, und eine Antriebsmutter aufweist. Dabei kann es besonders vorteilhaft sein, wenn der Gewindespindelantrieb als Kugelgewindetrieb mit einer Kugelumlaufspindel und einer entsprechenden Antriebsmutter ausgestaltet ist.

Weiter kann es dabei vorteilhaft sein, wenn die Gewindespindel des Gewindespindelantriebs feststehend ist und/oder die Antriebsmutter mit dem Bettschlitten verbunden und durch die manuelle und/oder die motorische Bettschlitten-Antriebseinheit, vorzugsweise über einen oder den Riemen, insbesondere einen oder den Zahnriemen, relativ zur Gewindespindel rotierbar antreibbar ist. Die Antriebsmutter kann ein Lager, insbesondere ein Kugellager mit mehreren, vorzugsweise als Kugeln ausgestalteten, Wälzkörper aufweisen.

Um eine möglichst präzise Verstellung des Planschlittens entlang der zugeordneten Bewegungsachse zu ermöglichen, kann es vorteilhaft sein, wenn der Planschlitten mittels eines Gewindespindelantriebs verstellbar ist, wobei der Gewindespindelantrieb eine Gewindespindel, insbesondere eine in einer oder der x-Achse angeordnete Gewindespindel und eine Antriebsmutter aufweist. Dabei kann es besonders vorteilhaft sein, wenn der Gewindespindelantrieb als Kugelgewindetrieb mit einer Kugelumlaufspindel und einer entsprechenden Antriebsmutter ausgestaltet ist.

Weiter kann es dabei vorteilhaft sein, wenn die Gewindespindel des Gewindespindelantriebs eine relativ zur Antriebsmutter rotierbare Gewindespindel ist und durch die manuelle und/oder die motorische Planschlitten-Antriebseinheit antreibbar ist und/oder die Antriebsmutter rotationsfest mit dem Planschlitten verbunden ist. Die Antriebsmutter kann ein Lager, insbesondere ein Kugellager mit mehreren, vorzugsweise als Kugeln ausgestalteten, Wälzkörpern aufweisen.

Weiter besteht zudem die Aufgabe, eine Entsorgung von Spänen zu erleichtern. Diese Aufgabe wird durch eine gegenüber den vorgenannten Ausführungsformen eigenständigen oder diese weiterbildenden Ausgestaltung gelöst, bei welcher vorgesehen ist, dass die Drehmaschine einen aus einem Gehäuse, insbesondere bis zu einem durch einen Anschlag definierten maximalen Auszugsweg, ausziehbaren Auffangbehälter für Späne, vorzugsweise einen als Schublade ausgebildeten Auffangbehälter für Späne, aufweist, der mehrere Durchtrittsöffnungen aufweist, und dass der ausziehbare Auffangbehälter in einer Ebene über einem zweiten, insbesondre fest installierten, Auffangbehälter angeordnet ist. Beim Bearbeiten eines Werkstücks ist es erforderlich, dass ein Kühlschmiermittel auf das Werkstück und/oder das Werkzeug zur Wärmeabfuhr und der Verminderung der Reibung zwischen Werkzeug und Werkstück aufgetragen wird. Dieses Kühlschmiermittel vermischt sich mit abgespanten Abfällen. Eine Entsorgung der Späne ist daher häufig nur zusammen mit dem Kühlschmiermittel möglich. Über die Durchtrittsöffnungen kann das Kühlschmiermittel aus dem ersten Auffangbehälter austreten und im zweiten Auffangbehälter gesammelt werden. Das Kühlschmiermittel kann dadurch auch wiederverwertet werden. Vorzugsweise sind die Durchmesser der Durchtrittsöffnungen so klein, dass Späne nicht oder kaum hindurch passen.

Besonders vorteilhaft kann es dabei sein, wenn die Durchtrittsöffnungen und ein oder der maximale Auszugsweg des ausziehbaren Auffangbehälters derart ausgestaltet sind, dass die Durchtrittsöffnungen im ausgezogenen Zustand des ausziehbaren Auffangbehälters stets über dem zweiten Auffangbehälter liegen, insbesondere wobei die Durchtrittsöffnungen in einem Boden des ausziehbaren Auffangbehälters ausgebildet sind. Dadurch kann ein unerwünschtes Auslaufen und Verschmutzungen eines Bodens bei der Entsorgung der Späne verhindert oder vermindert werden. Alternativ oder ergänzend dazu kann es vorteilhaft sein, wenn der ausziehbare und/oder der zweite Auffangbehälter ein Gefälle und/oder eine Ablauföffnung zum Ablauf von Kühlschmiermittel, insbesondere zur Rückführung in einen Kühlschmiermittelkreislauf, aufweist/aufweisen. Durch ein Gefälle kann das Kühlschmiermittel besser in einen bestimmten Bereich des Auffangbehälters geleitet werden, vorzugsweise in einen Bereich mit der Ablauföffnung.

Gemäß einer Ausgestaltung kann der zweite Auffangbehälter fest installiert sein, insbesondere also nicht ausziehbar sein. Dies hat den Vorteil, dass eine versehentliche Entnahme des zweiten Auffangbehälters und ein damit verbundenes Auslaufen des Kühlschmiermittels besser verhindert werden kann. Beispielsweise kann er als Wanne ausgebildet sein.

Der zweite Auffangbehälter kann eine Rückführöffnung und/oder Rückführleitung zur Rückführung des aufgefangenen Kühlschmiermittels in den Kühlschmiermittelkreislauf aufweisen.

Um einen besonders präzisen und stoßunempfindlichen Lauf zu ermöglichen, kann es vorteilhaft sein, wenn die Drehmaschine eine am Maschinenbett oder durch das Maschinenbett ausgebildete, insbesondere prismenförmige, Gleitführung für den Bettschlitten aufweist, vorzugsweise wobei die Führungsflächen der Gleitführung per Handschabung gefertigt sind. Durch die Handschabung ist eine bessere Verteilung eines Gleitmittels möglich, so dass ein homogeneres Verstellen des Bettschlittens erreichbar ist.

Um ein Zerkratzen der Führungsflächen der Gleitführung zu verhindern, kann es vorteilhaft sein, wenn über den Führungsflächen einer oder der bereits zuvor genannten Gleitführung eine Abdeckung ausgebildet ist, um zu verhindern, dass Späne oder anderer Schmutz auf die Führungsflächen fallen.

Es kann weiter zweckmäßig sein, dass die Drehmaschine einen Reitstock aufweist, der über zumindest eine zuschaltbare, insbesondere mehrere Wälzkörper aufweisende, Wälzlagerung entlang der Längsachse des Maschinenbetts, insbesondere entlang einer oder der bereits genannten Gleitführung für den Bettschlitten, verschiebbar geführt ist. Besonders vorteilhaft kann es dabei sein, wenn die Wälzkörper in Gebrauchsstellung aus zumindest einer Ausnehmung am Reitstockboden herausbewegbar sind. Reitstöcke dienen zum Abstützen von Werkstücken und sind in der Regel sehr schwer, weshalb zu ihrer Verstellung ein hoher Kraftaufwand notwendig sein kann. Anhand der Wälzlagerung ist daher eine einfachere Verstellbarkeit des Reitstocks möglich, wobei die Wälzlagerung eine Einstellung für eine Verstellposition und eine Fixierposition aufweist, so dass ein ungewolltes Verstellen verhindert ist.

Gemäß einer weiteren vorteilhaften Ausgestaltung kann es vorgesehen sein, dass die zuschaltbare Wälzlagerung durch Federelemente, insbesondere durch Tellerfedern, beaufschlagte Wälzkörper aufweist, über welche die Wälzkörper in die Gebrauchsstellung, das heißt die Verstellposition, überführbar sind. Alternativ oder ergänzend dazu kann es zweckmäßig sein, wenn die Wälzkörper durch ein manuelles Betätigungselement, insbesondere einen Hebel, in Gebrauchsstellung bewegbar sind, wodurch ein einfacher Wechsel zwischen Verstellposition und Fixierposition möglich ist.

Gemäß einer weiteren vorteilhaften Ausgestaltung kann es vorgesehen sein, dass die zumindest eine weitere motorische Antriebseinheit als Elektromotor ausgestaltet ist, vorzugsweise dass die motorischen Bettschlitten- und Planschlitten-Antriebseinheiten jeweils als Elektromotor ausgestaltet sind, und/oder dass ein oder das bereits genannte Betätigungselement der zumindest einen manuellen Antriebseinheit als Handrad oder Handkurbel ausgestaltet ist.

Um jederzeit bestimmen zu können, welchen Weg der Bett- und/oder Planschlitten innerhalb seines Stellweges zurückgelegt hat, kann es vorteilhaft sein, wenn die Drehmaschine zumindest eine elektronische Positionserkennungsvorrichtung aufweist, anhand welcher eine Erkennung der jeweiligen Position des Bettschlittens und/oder des Planschlittens innerhalb eines Stellweges des jeweiligen Schlittens möglich ist, insbesondere derart, dass die elektronische Positionserkennungsvorrichtung mit einem Geber der motorischen Antriebseinheit oder der motorischen Antriebseinheiten elektronisch gekoppelt ist, so dass durch die Positionserkennungsvorrichtung im manuellen und im motorischen Betrieb eine Position erfassbar ist. Dies kann dadurch erreicht werden, dass eine oder die Abtriebswelle der manuellen Bettschlitten-Antriebseinheit und eine oder die Abtriebswelle der motorischen Bettschlitten-Antriebseinheit miteinander derart gekoppelt sind, dass beide Abtriebswellen unabhängig von der Antriebsart mitbewegt werden.

Gleiches gilt für die Positionserfassung des Planschlittens. Hier kann es vorgesehen sein, dass eine oder die Abtriebswelle der manuellen Planschlitten-Antriebseinheit und eine oder die Abtriebswelle der motorischen Planschlitten-Antriebseinheit miteinander derart gekoppelt sind, dass beide Abtriebswellen unabhängig von der Antriebsart mitbewegt werden.

Somit ist es möglich, dass mittels der elektronischen Positionserkennungsvorrichtung eine kontinuierliche Bestimmung der Position des Bettschlittens und/oder des Planschlittens erfolgt, unabhängig davon, ob der jeweilige Schlitten mit seiner manuellen oder motorischen Antriebseinheit verstellt wird. Dies ermöglicht ein einfaches Umschalten von einem manuellen auf einen motorischen Betrieb und umgekehrt, insbesondere ohne dass einer der Schlitten zuvor in eine Ausgangslage bewegt werden muss. Insbesondere ein elektronischer Werkzeugspeicher (beispielsweise in einem Programm und/oder einer Systemsteuerung der Drehmaschine) kann somit beliebig einsetzbar sein, egal wie oft zwischen den Antrieben umgeschaltet wird. Somit kann es vorgesehen sein, dass der elektronische Werkzeugspeicher bei einem Wechsel zwischen dem motorischen und dem manuellen Antrieb nicht abgeschaltet und/oder gelöscht wird, insbesondere sich also das ausgewählte Werkzeug und/oder mit diesem verknüpfte Werkzeugdaten merkt.

Die Positionserkennungsvorrichtung kann ein Teil der bereits zuvor genannten Erfassungseinheit sein oder mit dieser elektrisch gekoppelt sein oder zusätzlich zu der Erfassungseinheit ausgebildet sein.

Die Erfindung betrifft eine Drehmaschine mit einer dezentralen Antriebstechnik zur Bearbeitung eines Werkstücks mit einer mittels eines Spindelantriebes drehbaren Arbeitsspindel, einem Bettschlitten, der entlang einer z-Achse eines Maschinenbetts der Drehmaschine beweglich geführt ist, und einem auf dem Bettschlitten senkrecht zur Längsachse des Maschinenbetts entlang einer x-Achse beweglich geführten Planschlitten, wobei zumindest entweder der Bettschlitten oder der Planschlitten anhand einer manuellen und einer gegenüber dem Spindelantrieb weiteren motorischen Antriebseinheit verstellbar ist

Die Erfindung wird nun anhand mehrerer Ausführungsbeispiele näher beschrieben, ist jedoch nicht auf diese Ausführungsbeispiele beschränkt. Weitere erfindungsgemäße Ausführungsbeispiele ergeben sich durch die Kombination einzelner oder mehrerer Merkmale der Schutzansprüche untereinander und/oder mit einzelnen oder mehreren Merkmalen der Ausführungsbeispiele.

Es zeigt:
- Fig. 1: eine vereinfachte schematische Schnittdarstellung der gesamten dem Bettschlitten zugeordneten Antriebsvorrichtung mit manueller und motorischer Bettschlitten-Antriebseinheit und dem Bettschlitten zugeordnetem Gewindespindelantrieb,
- Fig. 2: eine vereinfachte schematische Darstellung der gesamten dem Planschlitten zugeordneten Antriebsvorrichtung mit manueller und motorischer Bettschlitten-Antriebseinheit und dem Bettschlitten zugeordnetem Gewindespindelantrieb,
- Fig. 3: eine vereinfachte schematische Frontalansicht eines Gehäuses eines Drehmaschinenunterbaus mit einem ersten und einem zweiten Auffangbehälter,
- Fig. 4: eine vereinfachte schematische Schnittdarstellung des Gehäuses des in Fig. 3 mit B angezeigten Schnitts, und
- Fig. 5: eine vereinfachte schematische Perspektivdarstellung des in den Fig. 3 und 4 gezeigten Gehäuses.

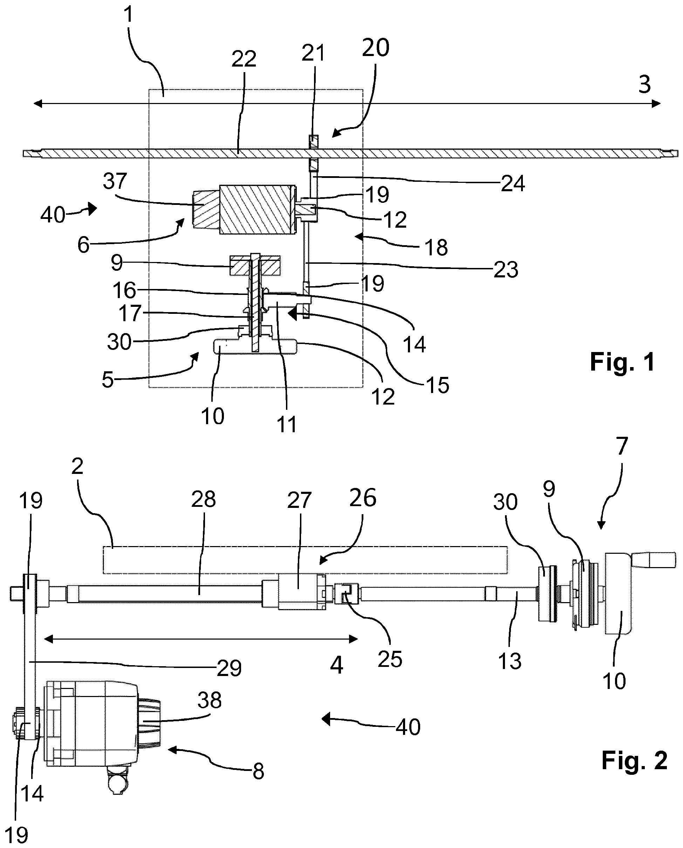

In Figur 1 ist eine Antriebsvorrichtung eines Bettschlittens 1 einer erfindungsgemäßen Drehmaschine gezeigt, die eine manuelle Bettschlitten-Antriebseinheit 5, eine motorische Bettschlitten-Antriebseinheit 6 und einen dem Bettschlitten 1 zugeordnete Gewindespindelantrieb 20 aufweist.

Der Bettschlitten 1 ist entlang der z-Achse 3, die einer Längsachse eines Maschinenbetts der Drehmaschine entspricht, wahlweise über die manuelle Bettschlitten-Antriebseinheit 5 und die motorische Bettschlitten-Antriebseinheit 6 verstellbar. Die manuelle Bettschlitten-Antriebseinheit 5 und die motorische Bettschlitten-Antriebseinheit 6 sind jeweils mit dem Bettschlitten 1 verbunden und dadurch gemeinsam mit diesem verstellbar.

Die Drehmaschine weist wenigstens eine Erfassungseinheit 40 auf, die dazu eingerichtet ist, zu jeder Zeit eine Position der Werkzeughalterung innerhalb der Bewegungsachsen 3, 4 zu erfassen und/oder anzuzeigen. Dies hat den Vorteil, dass zwischen einem manuellen und einem motorischen Betrieb einfach gewechselt werden kann, ohne dass eine Neuausrichtung der Werkzeughalterung, beispielsweise durch Zurückfahren in eine Ausgangsposition, erforderlich ist.

In Figur 2 ist eine Antriebsvorrichtung eines Planschlittens 2 einer erfindungsgemäßen Drehmaschine gezeigt, die eine manuelle Planschlitten-Antriebseinheit 7, eine motorische Planschlitten-Antriebseinheit 8 und einen dem Planschlitten 2 zugeordnete Gewindespindelantrieb 26 aufweist.

Der Planschlitten 2 ist entlang der x-Achse 4, die senkrecht zu der Längsachse des Maschinenbetts der Drehmaschine und/oder einer Drehachse einer Arbeitsspindel verläuft, wahlweise über die manuelle Planschlitten-Antriebseinheit 7 und die motorische Planschlitten-Antriebseinheit 8 verstellbar. Die manuelle Planschlitten-Antriebseinheit 7 und die motorische Planschlitten-Antriebseinheit 8 sind jeweils mit dem Bettschlitten 1 verbunden und dadurch gemeinsam mit diesem verstellbar.

Der Bettschlitten 1 und der Planschlitten 2 sind entlang ihren zugewiesenen Bewegungsachsen 3, 4 gleichzeitig verstellbar. Eine Verstellung kann dabei wahlweise jeweils über die manuelle Antriebseinheit 5, 7 oder die motorische Antriebseinheit 6, 8 erfolgen. Um eine hohe Genauigkeit bei der Bearbeitung eines Werkstückes durch ein Werkzeug zu erreichen, ist mittels einer der motorischen Antriebseinheiten 6, 8 eine Fixierung des jeweiligen Schlittens 1, 2 in einer Position möglich, während der andere Schlitten 1, 2 durch seine manuelle 5, 7 oder motorische 6, 8 Antriebseinheit verstellbar ist.

Die manuelle Bettschlitten-Antriebseinheit 5 weist ein Betätigungselement 10 auf, welches beispielsweise als Handrad oder Handkurbel ausgebildet sein kann. Das Betätigungselement 10 ist fest mit einer beispielsweise als Innenwelle 17 ausgebildeten Zwischenwelle verbunden oder einstückig ausgebildet. Mittels der Zwischenwelle kann die Abtriebswelle 11 der manuelle Bettschlitten-Antriebseinheit 5 angetrieben werden. Die Innenwelle 17 kann beispielsweise innerhalb einer diese umgebenden Hohlwelle 16 drehbar gelagert sein. Die Hohlwelle 16 kann mit der Innenwelle 17 über eine Kupplungsvorrichtung 9 koppelbar sein, so dass im gekuppelten Zustand ein Kraftfluss von der Innenwelle 17 auf die Außenwelle 16 möglich ist. Durch Betätigung, insbesondere durch Drehen, des Betätigungselements 10 der manuellen Bettschlitten-Antriebseinheit 5 ist die Innenwelle 17 durch einen Benutzer von Hand antreibbar. Die Außenwelle 16 kann schließlich so, insbesondere indirekt, mit der Abtriebswelle 11 gekoppelt sein.

Die Kupplungsvorrichtung 9 der manuellen Bettschlitten-Antriebseinheit 5 weist zwei Kupplungselemente auf, die im gekuppelten Zustand einen Kraftfluss von einem auf das andere Kupplungselement ermöglichen, so dass eine manuelle Kraft auf den Bettschlitten 1 übertragbar ist. In entkuppeltem Zustand ist das Betätigungselement 10 freilaufend. Ein erstes Kupplungselement der Kupplungsvorrichtung 9 ist mit der Innenwelle 17 und ein zweites Kupplungselement ist mit der Hohlwelle 16 verbunden. Die Kupplungsvorrichtung 9 ist daher zwischen dem Betätigungselement 10 und einer Abtriebswelle 11 der manuellen Bettschlitten-Antriebseinheit 5 angeordnet. Die Abtriebswelle 11 der manuellen Bettschlitten-Antriebseinheit 5 ist über ein Winkelgetriebe 15, insbesondere über ein Kegelradgetriebe 15, mit der Hohlwelle 16 mechanisch gekoppelt, so dass ein Drehmoment der Hohlwelle 16 auf die quer, insbesondere rechtwinklig, zur Hohlwelle 16 angeordneten Abtriebswelle 11 übertragbar ist. In gekuppeltem Zustand ist daher durch eine manuelle Betätigung des Betätigungselements 10 der manuellen Bettschlitten-Antriebseinheit 5 die Abtriebswelle 11 der manuellen Bettschlitten-Antriebseinheit 5 antreibbar.

Die Kupplungsvorrichtung 9 der manuellen Bettschlitten-Antriebseinheit 5 ist als eine elektromagnetische Kupplungsvorrichtung 9 ausgestaltet, die im deaktivierten, stromlosen Zustand entkuppelt ist und im aktivierten, bestromten Zustand gekuppelt ist, so dass eine manuelle Kraftübertragung auf den Bettschlitten 1 nur im gekuppelten Zustand möglich ist.

Um eine Kraftübertragung von der manuellen 5 und der motorischen Bettschlitten-Antriebseinheit 6 auf den Bettschlitten 1 zu erreichen, weist die Drehmaschine ein als Zahnriemengetriebe ausgestaltetes Riemengetriebe 18 auf. Die Abtriebswelle 11 der manuellen Bettschlitten-Antriebseinheit 5 ist dabei mit einer als Zahnrad ausgebildeten Riemenscheibe 19 verbunden oder diese ist daran ausgebildet. Die Abtriebswelle 11 ist über einen ersten Zahnriemen 23 mit einer Abtriebswelle 12 der motorischen Bettschlitten-Antriebseinheit 6 verbunden. An der Abtriebswelle 12 ist ebenfalls eine als Zahnrad ausgestaltete Riemenscheibe ausgebildet oder mit der Abtriebswelle 12 fest verbunden.

Die motorische Bettschlitten-Antriebseinheit 6 ist als ein Elektromotor ausgebildet. Die Abtriebswelle 12 der motorischen Bettschlitten-Antriebseinheit 6 ist über einen zweiten Zahnriemen 24 mit einer drehbar gelagerten, antreibbaren Antriebsmutter 21 des Gewindespindelantriebs 20 des Bettschlittens 1 mechanisch gekoppelt.

Der Gewindespindelantrieb 20 des Bettschlittens weist neben der Antriebsmutter 21 eine Gewindespindel 22 auf. Die Gewindespindel 22 ist feststehend, das heißt unbeweglich insbesondere mit einem Maschinenbett verbunden. Die Antriebsmutter 21 ist, insbesondere mit einem nicht rotierbaeren Teil mit dem Bettschlitten 1 verbunden. Die Antriebsmutter 21, insbesondere ein rotierbarer Teil, ist relativ zur Gewindespindel 22 um diese drehbar gelagert, so dass bei Antrieb der Antriebsmutter 21 eine Verschiebung der Antriebsmutter 21 mitsamt dem Bettschlitten 1 entlang der in z-Achse 3 angeordneten Gewindespindel 22 erreichbar ist. Dabei wird eine Rotationsbewegung der Antriebsmutter 21, insbesondere des rotierbaren Teils, in eine Längsbewegung der Antriebsmutter 21 und des Bettschlittens 1 umgesetzt.

Der Gewindespindelantrieb 20 des Bettschlittens 1 ist als ein Kegelgewindetrieb 20 mit Kugelumlaufspindel 22 und wenigstens einer entsprechenden Antriebsmutter 21 ausgestaltet. Dabei handelt es sich um einen Kugelgewindetrieb 20 allgemein bekannter Art.

Die Drehmaschine weist eine Anzeigeeinheit 30 zur Anzeige eines zurückgelegten Stellweges oder einer Vorschubdistanz des Bettschlittens 1 entlang der z-Achse 3 auf. Die Anzeigeeinheit 30 kann beispielsweise als eine mechanische Anzeigeeinheit ausgebildet sein, die über eine Kupplung, beispielsweise eine Rutschkupplung und/oder einen O-Ring, mit der Hohlwelle 16 und/oder der Abtriebswelle 11 der manuellen Bettschlitten-Antriebseinheit 5 gekoppelt ist. Dadurch ist eine Anzeige des zurückgelegten Stellweges des Bettschlittens 1 unabhängig von der Antriebsart möglich, da sich die Hohlwelle 16 und/oder die Abtriebswelle 11 der manuellen Bettschlitten-Antriebseinheit 5 unabhängig davon dreht, ob mit der manuellen 5 oder der motorischen Bettschlitten-Antriebseinheit 6 angetrieben wird. Alternativ oder ergänzend wäre es auch denkbar, die Anzeigeeinheit direkt oder indirekt mit der Hohlwelle 16 und/oder Abtriebswelle 11 und/oder der Abtriebswelle 12 zu koppeln. Die Anzeigeeinheit 30 des Bettschlittens 1 kann beispielsweise als eine analoge Anzeigeeinheit 30 ausgestaltet sein. Die Anzeigeeinheit 30 des Bettschlittens 1 kann einen Zähler aufweisen, mittels welchem eine Anzahl erfolgter Umdrehungen der Hohlwelle 16 und/oder der Abtriebswelle 11 gezählt wird. Die Anzahl an Umdrehungen kann beispielsweise durch eine Berücksichtigung einer Gewindesteigung der Gewindespindel 22 in eine zurückgelegte Strecke des Bettschlittens 1 umgerechnet und/oder angezeigt werden.

Die motorische Bettschlitten-Antriebseinheit 6 weist zudem einen als Drehgeber ausgestalteten Geber 37 auf, über welchen eine Positionsbestimmung des Bettschlittens 1 möglich ist. Dazu weist die Drehmaschine eine vorzugsweise elektronische Positionserkennungsvorrichtung auf, die mit dem Geber 37 elektrisch verbunden ist. Somit ist es möglich, mittels eines Zählers, insbesondere der elektronischen Positionserkennungsvorrichtung des Bettschlittens 1, eine Anzahl an zurückgelegten Umdrehungen der Abtriebswelle 12 zu erfassen und beispielsweise durch eine Berücksichtigung einer Gewindesteigung der Gewindespindel 22 in eine zurückgelegte Strecke des Bettschlittens 1 umzurechnen. Besonders vorteilhaft kann dabei sein, wenn durch eine Kopplung der motorischen Bettschlitten-Antriebseinheit 6 und der manuellen Bettschlitten-Antriebseinheit 5 die Abtriebswelle 12 auch im manuellen Betrieb mitgedreht wird, so dass eine Positionserkennung des Bettschlittens 1 unabhängig von der Antriebsart möglich ist.

Die manuelle Planschlitten-Antriebseinheit 7 weist ein Betätigungselement 10 auf, welches beispielsweise als Handrad oder Handkurbel ausgebildet sein kann. Das Betätigungselement 10 ist fest mit einem Achsstummel 39 verbunden oder einstückig ausgebildet. Durch Betätigung, insbesondere durch Drehen, des Betätigungselements 10 der manuellen Planschlitten-Antriebseinheit 6 ist der Achsstummel 39 durch einen Benutzer von Hand antreibbar.

Der Achsstummel 39 ist mit einem Kupplungselement einer Kupplungsvorrichtung 9 verbunden. Die Kupplungsvorrichtung 9 weist ein weiteres Kupplungselement auf, das mit einer Abtriebswelle 13 der manuellen Planschlitten-Antriebseinheit 6 fest verbunden ist. In gekuppeltem Zustand der Kupplungsvorrichtung 9 ist eine Kraftübertragung durch Betätigen des Betätigungselements 10 auf die Abtriebswelle 13 möglich. In entkuppeltem Zustand ist das Betätigungselement 10 freilaufend, so dass kein Kraftfluss vom Betätigungselement 21 auf die Abtriebswelle 13 möglich ist.

Die Kupplungsvorrichtung 9 der manuellen Planschlitten-Antriebseinheit 6 ist als eine elektromagnetische Kupplungsvorrichtung 9 ausgestaltet, die im deaktivierten, stromlosen Zustand entkuppelt ist und im aktivierten, bestromten Zustand gekoppelt ist, so dass eine manuelle Kraftübertragung auf den Planschlitten 2 nur im gekuppelten Zustand möglich ist.

Um eine Kraftübertragung von der manuellen Planschlitten-Antriebseinheit 7 auf den Planschlitten 2 zu erreichen, ist die Abtriebswelle 13 der manuellen Planschlitten-Antriebseinheit 7 über eine als Klauenkupplung ausgebildete Kupplung 25 mit einer Gewindespindel 28 eines Gewindespindelantriebes 26 des Planschlittens 2 gekuppelt oder kuppelbar.

Der Gewindespindelantrieb 26 des Planschlittens 2 weist neben der Gewindespindel 28 eine Antriebsmutter 27 auf. Die Gewindespindel 28 ist um eine Rotationsachse rotierbar gelagert. Die Gewindespindel 28 ist wahlweise mittels der manuellen 7 und mittels der motorischen Planschlitten-Antriebseinheit 8 antreibbar. Die Antriebsmutter 27 ist fest mit dem Planschlitten 2 verbunden und daher relativ zur Gewindespindel 28 rotationsfest ausgestaltet. Bei Antrieb der Gewindespindel 28 kann daher deren Drehbewegung in eine Längsbewegung der Antriebsmutter umgesetzt werden, so dass sich die Antriebsmutter 27 zusammen mit dem Planschlitten 2 entlang der x-Achse verstellen lässt.

Der Gewindespindelantrieb 26 des Planschlittens 2 ist als ein Kegelgewindetrieb 26 mit Kugelumlaufspindel 28 und wenigstens einer entsprechenden Antriebsmutter 27 ausgestaltet. Dabei handelt es sich um einen Kugelgewindetrieb 26 allgemein bekannter Art.

Die Drehmaschine weist eine weitere Anzeigeeinheit 30 zur Anzeige eines zurückgelegten Stellweges, also einer Zustelldistanz des Planschlittens 2 entlang der x-Achse 4 auf. Die weitere Anzeigeeinheit 30 kann beispielsweise als eine mechanische Anzeigeeinheit ausgebildet sein, die über eine Kupplung, beispielsweise eine Rutschkupplung und/oder einen O-Ring, mit der Abtriebswelle 13 und/oder der Gewindespindel 28 gekoppelt ist. Die Kopplung kann dabei direkt oder indirekt, also durch Zwischenschalten weiterer Elemente, erfolgen. Dadurch ist eine Anzeige des zurückgelegten Stellweges des Planschlittens 2 unabhängig von der Antriebsart möglich, da sich die Abtriebswelle 13 und/oder die Gewindespindel 28 unabhängig davon dreht, ob mit der manuellen 7 oder der motorischen Planschlitten-Antriebseinheit 8 angetrieben wird. Alternativ oder ergänzend wäre es auch denkbar, die weitere Anzeigeeinheit 30 direkt oder indirekt mit der Abtriebswelle 13 und/oder der Gewindespindel 28 und/oder der Abtriebswelle 14 der motorischen Planschlitten-Antriebseinheit 8 zu koppeln. Die weitere Anzeigeeinheit 30 kann beispielsweise als eine analoge Anzeigeeinheit 30 ausgestaltet sein. Die Anzeigeeinheit 30 des Planschlittens 2 kann einen Zähler aufweisen, mittels welchem eine Anzahl erfolgter Umdrehungen der Abtriebswelle 13 und/oder der Gewindespindel 28 gezählt wird. Die Anzahl an Umdrehungen kann beispielsweise durch eine Berücksichtigung einer Gewindesteigung der Gewindespindel 28 in eine zurückgelegte Strecke des Planschlittens 2 umgerechnet und/oder angezeigt werden.

Die Anzeigeeinheit/en 30 des Bettschlittens 1 und/oder des Planschlittens kann/können Teil der bereits zuvor genannten Erfassungseinheit 40 sein oder zusätzlich zu dieser ausgebildet sein.

Die Abtriebswelle 14 der motorischen Planschlitten-Antriebseinheit 8 weist eine als Zahnrad ausgestaltete Riemenscheibe 19 auf die über einen als Zahnriemen ausgestalteten Riemen 29 mit der Gewindespindel 28, insbesondere über einer an der Gewindespindel 28 ausgebildeten oder vorgesehenen Riemenscheibe 19, insbesondere über ein Zahnrad, mechanisch gekoppelt ist, so dass eine Drehbewegung der Abtriebswelle 14 der motorischen Planschlitten-Antriebseinheit 8 auf die Gewindespindel 28 übertragbar ist und umgekehrt.

Die motorische Planschlitten-Antriebseinheit 8 weist einen als Drehgeber ausgestalteten Geber 38 auf, über welchen eine Positionsbestimmung des Planschlittens 2 möglich ist. Dazu weist die Drehmaschine eine vorzugsweise elektronische Positionserkennungsvorrichtung auf, die mit dem Geber 38 elektrisch verbunden ist. Somit ist es möglich, mittels eines Zählers, insbesondere der elektronischen Positionserkennungsvorrichtung des Planschlittens 2, eine Anzahl an zurückgelegten Umdrehungen der Abtriebswelle 14 zu erfassen und beispielsweise durch eine Berücksichtigung einer Gewindesteigung der Gewindespindel 28 in eine zurückgelegte Strecke des Planschlittens 2 umzurechnen. Besonders vorteilhaft kann dabei sein, wenn durch eine Kopplung der motorischen Planschlitten-Antriebseinheit 8 und der manuellen Planschlitten-Antriebseinheit 7 die Abtriebswelle 14 auch im manuellen Betrieb mitgedreht wird, so dass eine Positionserkennung des Planschlittens 2 unabhängig von der Antriebsart möglich ist.

Die Positionserkennungsvorrichtung des Bettschlittens 1 und/oder des Planschlittens 2 kann ein Teil der bereits zuvor genannten Erfassungseinheit 40 sein oder mit dieser elektrisch gekoppelt sein oder zusätzlich zu der Erfassungseinheit 40 ausgebildet sein.

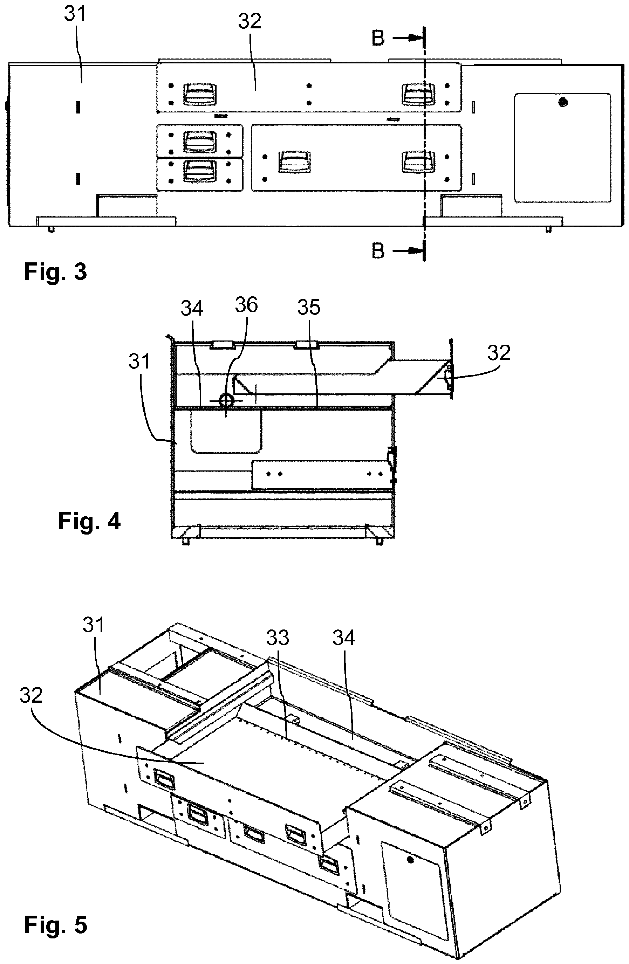

In den Figuren 3 bis 5 ist ein Gehäuse 31 eines Drehmaschinenunterbaus mit einem ersten Auffangbehälter 32 und einem zweiten Auffangbehälter 34 dargestellt. Der erste Auffangbehälter 32 ist als eine aus dem Gehäuse 31 ausziehbare Schublade ausgestaltet und weist mehrere Durchtrittsöffnungen 33 auf, die im Boden des Auffangbehälters 32 ausgebildet sind. Die Durchtrittsöffnungen 33 sind zum Auslaufen eines Kühlschmiermittels in den im Gehäuse 31 unterhalb des ersten Auffangbehälters 32 angeordneten zweiten Auffangbehälter 34 ausgestaltet. Der zweite Auffangbehälter 34 ist als eine fest im Gehäuse 31 installierte Wanne ausgebildet. Während der Bearbeitung eines Werkstücks anhand der Drehmaschine können herabfallende Späne über den ersten Auffangbehälter 32 aufgefangen werden, während eingesetztes Kühlschmiermittel zunächst im ersten Auffangbehälter 32 aufgefangen wird und anschließend durch die Durchtrittsöffnungen 33 in den zweiten Auffangbehälter 34 abfließt. Der erste 32 und/oder der zweite Auffangbehälter 34 weisen ein durch den Boden des Auffangbehälters 32, 34 ausgebildetes Gefalle 35 auf. Der zweite Auffangbehälter 34 weist in einer Seitenwand eine Ablauföffnung 36 auf, durch welche das Kühlschmiermittel aus dem zweiten Auffangbehälter 34 zurück in einen Kühlschmiermittelkreislauf abfließen kann.

Die Durchtrittsöffnungen 33 sind idealerweise derart im Boden des ersten Auffangbehälters 32 angeordnet, dass diese auch dann über dem zweiten Auffangbehälter 34 verbleiben, wenn der erste Auffangbehälter 32 aus dem Gehäuse 31, insbesondere einen maximalen Auszugsweg, herausgezogen ist. Der maximale Auszugsweg kann beispielsweise über einen am Gehäuse 31 ausgebildeten Anschlag festgelegt sein, an welchen der erste Auffangbehälter 32 in maximaler Auszugsstellung anschlägt. Vorzugsweise sind die Durchtrittsöffnungen 33 in einem an einer Rückwand des ersten Auffangbehälter 32 angrenzenden Bereich einer Bodenplatte ausgebildet.

### Bezugszeichenliste

- 1: Bettschlitten
- 2: Planschlitten
- 3: Z-Achse
- 4: X-Achse
- 5: manuelle Bettschlitten-Antriebseinheit
- 6: motorische Bettschlitten-Antriebseinheit
- 7: manuelle Planschlitten-Antriebseinheit
- 8: motorische Planschlitten-Antriebseinheit
- 9: Kupplungsvorrichtung
- 10: Betätigungselement
- 11: Abtriebswelle der manuellen Bettschlitten-Antriebseinheit
- 12: Abtriebswelle der motorischen Bettschlitten-Antriebseinheit
- 13: Abtriebswelle der manuellen Planschlitten-Antriebseinheit
- 14: Abtriebswelle der motorischen Planschlitten-Antriebseinheit
- 15: Winkelgetriebe
- 16: Hohlwelle
- 17: Innenwelle
- 18: Riemengetriebe
- 19: Riemenscheibe
- 20: Gewindespindelantrieb des Bettschlittens
- 21: Antriebsmutter des Bettschlittens
- 22: Gewindespindel des Bettschlittens
- 23: erster Zahnriemen
- 24: zweiter Zahnriemen
- 25: Klauenkupplung
- 26: Gewindespindelantrieb des Planschlittens
- 27: Antriebsmutter des Planschlittens
- 28: Gewindespindel des Planschlittens
- 29: Zahnriemen
- 30: Anzeigeeinheit
- 31: Gehäuse
- 32: erster Auffangbehälter
- 33: Durchtrittsöffnungen
- 34: zweiter Auffangbehälter
- 35: Gefälle
- 36: Ablauföffnung
- 37: Drehgeber der motorischen Bettschlitten-Antriebseinheit
- 38: Drehgeber der motorischen Planschlitten-Antriebseinheit
- 39: Achsstummel
- 40: Erfassungseinheit

## Patentansprüche

1. Drehmaschine zur Bearbeitung eines Werkstücks, mit einer mittels eines Spindelantriebes drehbaren Arbeitsspindel und mit einer in mindestens zwei Bewegungsachsen (3, 4) verfahrbaren Werkzeughalterung, **dadurch gekennzeichnet, dass** die Werkzeughalterung in wenigstens einer Bewegungsachse (3, 4) wahlweise, vorzugsweise über eine mechanische Kopplung, mittels einer manuellen Antriebseinheit (5, 7) oder mittels einer von dem Spindelantrieb separaten motorischen Antriebseinheit (6, 8) motorisch antreibbar ist, und dass wenigstens eine Erfassungseinheit (40) für wenigstens eine Position der Werkzeughalterung ausgebildet ist, wobei eine mit der Erfassungseinheit (40) erfasste Position der Werkzeughalterung sowohl bei eingekoppelter manueller Antriebseinheit (5, 7) als auch bei eingekoppelter motorischer Antriebseinheit (6, 8) bereitgestellt ist.

2. Drehmaschine nach Anspruch 1, **dadurch gekennzeichnet, dass** die zumindest zwei Bewegungsachsen (3, 4) der Werkzeughalterung durch einen Bettschlitten (1) und/oder durch einen Planschlitten (2) definiert sind, insbesondere wobei der Bettschlitten (1) entlang einer Längsachse eines Maschinenbetts der Drehmaschine beweglich geführt ist und/oder der Planschlitten (2), vorzugsweise auf dem Bettschlitten (1), quer oder senkrecht zur Längsachse des Maschinenbetts beweglich geführt ist.

3. Drehmaschine nach einem der voranstehenden Ansprüche, **dadurch gekennzeichnet, dass** ein oder der Bettschlitten (1) mittels einer manuellen Bettschlitten-Antriebseinheit (5) und mittels einer motorischen Bettschlitten-Antriebseinheit (6), insbesondere entlang einer z-Achse (3), verstellbar ist, vorzugsweise wahlweise mittels entweder der manuellen Bettschlitten-Antriebseinheit (5) oder mittels der motorischen Bettschlitten-Antriebseinheit (6) verstellbar ist und/oder dass ein oder der Planschlitten (2) mittels einer manuellen Planschlitten-Antriebseinheit (7) und mittels einer motorischen Planschlitten-Antriebseinheit (8), insbesondere entlang einer x-Achse (4), verstellbar ist, vorzugsweise wahlweise mittels entweder der manuellen Bettschlitten-Antriebseinheit (7) oder mittels der motorischen Planschlitten-Antriebseinheit (8) verstellbar ist.

4. Drehmaschine nach einem der voranstehenden Ansprüche, **dadurch gekennzeichnet, dass** die Drehmaschine eine Kupplungsvorrichtung (9) oder mehrere Kupplungsvorrichtungen (9) aufweist, die jeweils zwischen einem Betätigungselement (10) der manuellen Antriebseinheit (5, 7) und einer Abtriebswelle (11) der manuellen Antriebseinheit (5, 7) angeordnet ist/sind und mittels welcher das Betätigungselement (10) der manuellen Antriebseinheit (5, 7) des Bettschlittens (1) und/oder des Planschlittens (2) jeweils mechanisch mit dem Bettschlitten (1) und/oder mit dem Planschlitten (2) koppelbar ist, wobei im entkuppelten Zustand keine Kraftübertragung durch die manuelle Antriebseinheit (5, 7) auf den Bettschlitten (1) und/oder den Planschlitten (2) möglich ist, vorzugsweise wobei die Drehmaschine zwei Kupplungsvorrichtungen (9) aufweist, wobei davon eine der manuellen Bettschlitten-Antriebseinheit (5) und die andere der manuellen Planschlitten-Antriebseinheit (7) zugeordnet ist.

5. Drehmaschine nach Anspruch 4, **dadurch gekennzeichnet, dass** die eine oder die Kupplungsvorrichtungen (9) als elektromagnetische Kupplungsvorrichtung/en ausgestaltet ist/sind, wobei diese derart eingerichtet ist/sind, dass sie im deaktivierten, stromlosen Zustand entkuppelt ist/sind und im aktivierten, bestromten Zustand gekuppelt ist/sind oder umgekehrt, und/oder dass eine oder die Abtriebswelle (11) der manuellen Bettschlitten-Antriebseinheit (5) über ein Winkelgetriebe (15) mit einer Hohlwelle (16) verbunden ist, wobei die Hohlwelle (16) mit einer mit einem oder dem Betätigungselement (10) der manuellen Bettschlitten-Antriebseinheit (5) verbundenen Innenwelle (17) über eine oder die Kupplungsvorrichtung (9), insbesondere eine oder die elektromagnetische Kupplungsvorrichtung (9), mechanisch koppelbar ist.

6. Drehmaschine nach einem der voranstehenden Ansprüche, **dadurch gekennzeichnet, dass** die Drehmaschine ein Riemengetriebe (18), insbesondere ein Zahnriemengetriebe, aufweist, über welches eine Kraftübertragung von einer oder der manuellen Bettschlitten-Antriebseinheit (5) und/oder einer oder der motorischen Bettschlitten-Antriebseinheit (6) auf einen oder den Bettschlitten (1) möglich ist und/oder dass eine oder die Abtriebswelle (11) einer oder der manuellen Bettschlitten-Antriebseinheit (5) mit einer Riemenscheibe (19), insbesondere mit einem Zahnrad (19), mechanisch gekoppelt oder koppelbar ist und diese Riemenscheibe (19) mit einer Abtriebswelle (12) der motorischen Bettschlitten-Antriebseinheit (6) und/oder einem Gewindespindelantrieb (20), insbesondere einer Antriebsmutter (21), des Bettschlittens (1) über einen Riemen (23, 24), insbesondere einen Zahnriemen (23, 24), verbunden ist.

7. Drehmaschine nach einem der voranstehenden Ansprüche, **dadurch gekennzeichnet, dass** eine oder die Abtriebswelle (13) einer oder der manuellen Planschlitten-Antriebseinheit (7) über eine Kupplung (25), insbesondere eine Klauenkupplung (25), mit einer Gewindespindel (28) eines dem Planschlitten (2) zugeordneten Gewindespindelantriebes (26) verkuppelbar oder gekuppelt ist und/oder dass eine oder die Abtriebswelle (14) einer oder der motorischen Planschlitten-Antriebseinheit (8), insbesondere über einen Zahnriemen (29), mit einer oder der Gewindespindel (28) eines oder des dem Planschlitten (2) zugeordneten Gewindespindelantriebes (26) mechanisch verbunden ist.

8. Drehmaschine nach einem der voranstehenden Ansprüche, **dadurch gekennzeichnet, dass** die Drehmaschine zumindest eine Anzeigeeinheit (30), insbesondere eine mechanische Anzeigeeinheit (30), zur Anzeige einer Vorschubdistanz und/oder einer Zustelldistanz aufweist, vorzugsweise wobei die zumindest eine Anzeigeeinheit (30) mit einer oder der Abtriebswelle (11) einer oder der manuellen Bettschlitten-Antriebseinheit (5) und/oder der Abtriebswelle (13) einer oder der manuellen Planschlitten-Antriebseinheit (7) mechanisch, insbesondere direkt oder indirekt, gekoppelt oder koppelbar ist, insbesondere über eine Rutschkupplung und/oder einen O-Ring mechanisch gekoppelt oder koppelbar ist, und/oder dass die Abtriebswelle (11) der manuellen Bettschlitten-Antriebseinheit (5) mit der Abtriebswelle (12) einer oder der motorischen Bettschlitten-Antriebseinheit (6), insbesondere über einen Zahnriemen (23, 24), mechanisch gekoppelt ist.

9. Drehmaschine nach einem der voranstehenden Ansprüche, **dadurch gekennzeichnet, dass** ein oder der Bettschlitten (1) mittels eines Gewindespindelantriebs (20) verstellbar ist, wobei der Gewindespindelantrieb (20) eine Gewindespindel (22), insbesondere eine in einer oder der z-Achse (3) angeordnete Gewindespindel (22), und eine Antriebsmutter (21) aufweist, vorzugsweise wobei der Gewindespindelantrieb (20) als Kugelgewindetrieb (20) mit einer Kugelumlaufspindel (22) und einer entsprechenden Antriebsmutter (21)ausgestaltet ist und/oder dass die Gewindespindel (22) des Gewindespindelantriebs (20) feststehend ist und/oder die Antriebsmutter (21) mit dem Bettschlitten (1) verbunden und durch die manuelle und/oder eine oder die motorische Bettschlitten-Antriebseinheit (5, 6), vorzugsweise über einen oder den Riemen (23, 24), insbesondere einen oder den Zahnriemen (23, 24), relativ zur Gewindespindel (22) rotierbar antreibbar ist.

10. Drehmaschine nach einem der voranstehenden Ansprüche, **dadurch gekennzeichnet, dass** ein oder der Planschlitten (2) mittels eines Gewindespindelantriebs (26) verstellbar ist, wobei der Gewindespindelantrieb (26) eine Gewindespindel (28), insbesondere eine in einer oder der x-Achse (4) angeordnete Gewindespindel (28) und eine Antriebsmutter (27) aufweist, vorzugsweise wobei der Gewindespindelantrieb (26) als Kugelgewindetrieb (26) mit einer Kugelumlaufspindel (28) und einer entsprechenden Antriebsmutter (27) ausgestaltet ist und/oder dass die Gewindespindel (28) des Gewindespindelantriebs (26) eine relativ zur Antriebsmutter (27) rotierbare Gewindespindel (28) ist und durch die manuelle und/oder die motorische Planschlitten-Antriebseinheit (7, 8) antreibbar ist und/oder die Antriebsmutter (27) rotationsfest mit dem Planschlitten (2) verbunden ist.

11. Drehmaschine nach dem Oberbegriff von Anspruch 1 oder nach einem der voranstehenden Ansprüche, **dadurch gekennzeichnet, dass** die Drehmaschine einen aus einem Gehäuse (31), insbesondere bis zu einem durch einen Anschlag definierten maximalen Auszugsweg, ausziehbaren Auffangbehälter (32) für Späne, vorzugsweise einen als Schublade ausgebildeten Auffangbehälter (32) für Späne, aufweist, der mehrere Durchtrittsöffnungen (33) aufweist, und dass der ausziehbare Auffangbehälter (32) in einer Ebene über einem zweiten, insbesondere fest installierten, Auffangbehälter (34) angeordnet ist.

12. Drehmaschine nach Anspruch 11, **dadurch gekennzeichnet, dass** die Durchtrittsöffnungen (33) und ein oder der maximale Auszugsweg des ausziehbaren Auffangbehälters (32) derart ausgestaltet sind, dass die Durchtrittsöffnungen (33) im ausgezogenen Zustand des ausziehbaren Auffangbehälters (32) stets über dem zweiten Auffangbehälter (34) liegen, insbesondere wobei die Durchtrittsöffnungen (33) in einem Boden des ausziehbaren Auffangbehälters (32) ausgebildet sind, und/oder dass der ausziehbare (32) und/oder der zweite Auffangbehälter (34) ein Gefälle (35) und/oder eine Ablauföffnung (36) zum Ablauf von Kühlschmiermittel, insbesondere zur Rückführung in einen Kühlschmiermittelkreislauf, aufweist/aufweisen.

13. Drehmaschine nach einem der voranstehenden Ansprüche, **dadurch gekennzeichnet, dass** über den Führungsflächen einer Gleitführung eine Abdeckung ausgebildet ist, um zu verhindern, dass Späne oder anderer Schmutz auf die Führungsflächen fallen.

14. Drehmaschine nach einem der voranstehenden Ansprüche, **dadurch gekennzeichnet, dass** die Drehmaschine einen Reitstock aufweist, der über zumindest eine zuschaltbare, insbesondere mehrere Wälzkörper aufweisende, Wälzlagerung entlang der Längsachse des Maschinenbetts, insbesondere entlang einer oder der Gleitführung für einen oder den Bettschlitten (1), verschiebbar geführt ist, vorzugsweise wobei die Wälzkörper in Gebrauchsstellung aus zumindest einer Ausnehmung am Reitstockboden herausbewegbar sind.

15. Drehmaschine nach einem der voranstehenden Ansprüche, **dadurch gekennzeichnet, dass** die Drehmaschine zumindest eine elektronische Positionserkennungsvorrichtung aufweist, anhand welcher eine Erkennung der jeweiligen Position des Bettschlittens (1) und/oder des Planschlittens (2) innerhalb eines Stellweges des jeweiligen Schlittens möglich ist, insbesondere derart, dass die elektronische Positionserkennungsvorrichtung mit einem Geber (37, 38) der motorischen Antriebseinheit (6, 8) oder der motorischen Antriebseinheiten (6, 8) elektronisch gekoppelt ist, so dass durch die Positionserkennungsvorrichtung im manuellen und im motorischen Betrieb eine Position erfassbar ist.
